## Europäisches Patentamt
## European Patent Office
## Office européen des brevets

(19)

(11) Veröffentlichungsnummer: **0 010 164 B1**

(12) **EUROPÄISCHE PATENTSCHRIFT**

(45) Veröffentlichungstag der Patentschrift:
21.04.82

(51) Int. Cl.³. **C 08 L 69/00,** C 08 J 3/28

(21) Anmeldenummer: 79103469.7

(22) Anmeldetag: 17.09.79

(54) Verfahren zur Herstellung von modifizierten Polycarbonat-Formkörpern.

(30) Priorität: 27.09.78 DE 2842004

(43) Veröffentlichungstag der Anmeldung:
30.04.80 Patentblatt 80/9

(45) Bekanntmachung des Hinweises auf die Patenterteilung:
21.04.82 Patentblatt 82/16

(84) Benannte Vertragsstaaten:
DE FR GB IT NL

(56) Entgegenhaltungen:
DE-A-2 057 274
DE-A1-2 757 066
DE-B-1 099 732
DE-B-1 201 990

(73) Patentinhaber: BAYER AG, Zentralbereich Patente, Marken und Lizenzen, D-5090 Leverkusen 1, Bayerwerk (DE)

(72) Erfinder: Adelmann, Siegfried, Dr., Bodelschwinghstrasse 18, D-4150 Krefeld (DE)
Erfinder: Margotte, Dieter, Dr., Wedelstrasse 48, D-4150 Krefeld (DE)
Erfinder: Nouvertné, Werner, Dr., Scheiblerstrasse 95, D-4150 Krefeld (DE)
Erfinder: Kleiner, Frank, Dr., Gerstenkamp 4, D-5000 Köln 80 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von modifizierten Polycarbonat-Formkörpern

Gegenstand der vorliegenden Erfindung ist ein Verfahren zur Herstellung von modifizierten thermoplastischen Polycarbonat-Formkörpern, das dadurch gekennzeichnet ist, daß man vernetzbare thermoplastische, aromatische Polycarbonate vor oder nach ihrer Granulierung an der Oberfläche in bekannter Weise durch Belichtung mit energiereichen Strahlen vernetzt und anschließend thermoplastisch verarbeitet, wobei die Formkörper 5—50 Gew.-%, vorzugsweise 10—30 Gew.-%, bezogen auf das Gesamtgewicht an unvernetztem und vernetztem Polycarbonat, vernetztes Polycarbonat enthalten sollen.

Die erfindungsgemäßen Formkörper können gegebenenfalls noch Flammschutzmittel in Mengen von 0,05—5 Gew.-%, vorzugsweise 0,1—2 Gew.-%, bezogen auf das Gewicht der Gesamtmischung, enthalten, die entweder vor oder nach der Bestrahlung zugemischt worden sind.

Die erfindungsgemäß erhältlichen modifizierten Polycarbonat-Formkörper sind durch ein günstiges Eigenschaftsbild ausgezeichnet, da sie einen variablen Anteil an vernetzten Polycarbonaten eingearbeitet enthalten. Sie können darüber hinaus durch die Zugabe von verschiedensten Zusätzen in ihrem Eigenschaftsbild weiter variiert werden. Als Zusätze eignen sich sowohl hochmolekulare thermoplastisch verarbeitbare Polymere als auch niedermolekulare organische oder anorganische Verbindungen.

Thermoplastische, aromatische Polycarbonate, die sich gemäß vorliegender Erfindung mittels UV- und/oder anderer energiereicher Strahlen vernetzen lassen, sind bekannt (siehe beispielsweise DE-A 20 63 050; DE-A 26 15 038; DE-B 12 21 012 und DE-A 15 95 703) beziehungsweise in den nachfolgenden deutschen Offenlegungsschriften beschrieben: 27 46 139, 27 46 140 und 27 46 141. Demzufolge müssen durch UV- oder andere energiereiche Strahlen vernetzbare Polycarbonate entweder Alkenyl-Gruppen oder labile C-H-Bindungen oder Benzophenon-Strukturen einkondensiert enthalten, um sie gegebenenfalls nach Zusatz von Photoinitiatoren und gegebenenfalls von Photoreduktionsmitteln und gegebenenfalls Sensibilisatoren an ihrer Oberfläche je nach Bedarf mehr oder weniger intensiv zu vernetzen. Ausführliche zusätzliche Erläuterungen können den deutschen Offenlegungsschriften 27 46 139, 27 46 140 und 27 46 141 sowie 28 29 258, 28 29 257 und 28 29 256 entnommen werden.

Derartige durch UV- oder andere energiereiche Strahlen vernetzbare thermoplastische, aromatische Polycarbonate werden durch Umsetzung von aromatischen Diphenolen und Phosgen nach bekannten Verfahren, beispielsweise dem Zweiphasengrenzflächenverfahren aufgebaut; siehe beispielsweise US 30 28 365 und die Monographie »H. Schnell, Chemistry and Physics of Polycarbonates, Interscience Publishers, New York, 1964«.

Derartige durch UV- oder andere energiereiche Strahlen vernetzbare thermoplastische, aromatische Polycarbonate sollen Gewichtsmittelmolekulargewichte $\overline{M}w$ zwischen 10 000 und 200 000, vorzugsweise zwischen 20 000 und 80 000 haben (gemessen durch Lichtzerstreuung).

Als Strahlenquellen dienen handelsübliche UV-Strahler, beispielsweise Philips HTQ 4 oder 7, Hanovia-Strahler u. a. beziehungsweise handelsübliche Elektronenstrahlhärter, beispielsweise der 150 kV-Elektronenbeschleuniger System ESH 150 der Firma Polymer Physik, Tübingen oder der 320 kV-Elektronenbeschleuniger der Firma Werner und Pfleiderer, Stuttgart. Die Bestrahlung erfolgt unter konventionellen Bedingungen.

Die an der Oberfläche vernetzbaren Polycarbonate werden in bekannter Weise extrudiert, entweder sofort als Extrusionsstrang oder als Granulat bestrahlt und mittels Extrusion oder Spritzgußverarbeitung in jede gewünschte Form gebracht.

Zur beliebigen Formgebung werden die erfindungsgemäßen oberflächenvernetzten Polycarbonat-Granulate unter üblichen Verarbeitungsbedingungen bei Massetemperaturen von 270—300°C und Formtemperaturen von 85—120°C auf für Polycarbonat üblichen Spritzgußmaschinen verspritzt.

Das erfindungsgemäße Verfahren kann dadurch variiert werden, daß vor der thermoplastischen Verarbeitung auch unvernetztes thermoplastisches, aromatisches Polycarbonat im Molekulargewichtsbereich $\overline{M}w$ zwischen 10 000 und 200 000, vorzugsweise zwischen 20 000 und 80 000 zugemischt werden kann, wobei die Mischung 5—50 Gew.-%, vorzugsweise 10—30 Gew.-%, bezogen auf das Gesamtgewicht an unvernetztem und vernetztem Polycarbonat, vernetztes Polycarbonat enthält.

Geeignete Flammschutzmittel zur Flammfestausrüstung der erfindungsgemäß erhältlichen Polycarbonat-Formkörper sind beispielsweise die für die Flammfestmachung von Polycarbonaten bekannten und geeigneten Verbindungen in Mengen von 0,05 bis 5 Gew.-%, vorzugsweise 0,1 bis 2 Gew.-%, bezogen auf Gesamtgewicht an Polycarbonat und synergistisch wirkenden Substanzen, wie sie in den DE-A 19 30 257, DE-A 20 49 358, DE-A 21 12 987, DE-A 22 53 072, DE-A 21 49 311 und anderen Literaturstellen beschrieben sind.

Geeignet sind beispielsweise Alkalisalze organischer und anorganischer Säuren, insbesondere die im Polycarbonat löslichen Alkalisalze organischer Säuren, also Alkalisalze von Carbonsäuren wie Kaliumisooctanat, Natriumisooctanat, Lithiumisooctanat, Kaliumperfluoroctanat, Natriumperfluoroctanat, Lithiumperfluoroctanat, Kaliumsalze der 5-Äthyl-dioxan-1,3-yl-(5)-carbonsäure, Rubidiumisooctanat, Rubidiumperfluoroctanat oder Alkalisalze von Sulfonsäuren wie beispielsweise Alkalisalze der Perfluoralkansulfonsäure, wie Kaliumperfluormethansulfonat, Kaliumperfluoroctansulfonat und Kaliumperfluorbutansulfonat. Des weiteren können Alkalisalze der Laurinsäure, Stearinsäure, Ölsäure, des Phthalsäuremonobenzylesters, des Adipinsäuremonobutylesters, der p-Octylbenzoesäure, p.-tert.-Butylbenzoesäure, der 3-(3,5-di-tert.-Butyl-4-hydroxyphenyl)-propionsäure und des Diglykolsäuremonodecylesters verwendet werden.

Die erfindungsgemäß erhältlichen Polycarbonat-Formkörper zeichnen sich durch eine gute Lösungsmittelbeständigkeit und Hydrolysebeständigkeit aus.

Darüber hinaus zeigen die erfindungsgemäß erhältlichen Polycarbonat-Formkörper eine im Vergleich zu herkömmlichen unmodifizierten Polycarbonaten deutlich erhöhte Spannungsrißkorrosionsbeständigkeit. Aufgrund dieser positiven Eigenschaften können die erfindungsgemäß erhaltenen Formkörper überall dort verwendet werden, wo neben guter Hydrolysebeständigkeit und Spannungsrißkorrosionsbeständigkeit auch eine gute Beständigkeit gegenüber organischen Lösungsmitteln gefordert werden, beispielsweise für Zierleisten im Automobil- und Möbelsektor, für Gehäuse von Haushaltsgeräten, z. B. Eierbecher und Kaffeemaschinen u. a.

Die verbesserte Hydrolysebeständigkeit wird anhand der Schlagzähigkeit gemessen; so fällt die Schlagzähigkeit eines in Wasser gekochten Prüfkörpers aus unmodifiziertem Polycarbonat nach 500 Stunden Kochzeit auf 8 kJ/m$^2$ ab, während ein gemäß der vorliegenden Erfindung modifizierter Polycarbonat-Prüfkörper nach 500 Stunden Kochzeit noch eine Schlagzähigkeit von 18 kJ/m$^2$ aufweist (siehe Tabelle 1).

Die erfindungsgemäß erhaltenen Polycarbonat-Formkörper sind ohne, insbesondere aber nach Zusatz von Flammschutzmitteln derart flammwidrig ausgerüstet, daß sie beispielsweise im Bausektor als Gebäudeverkleidung eingesetzt werden können.

So erreicht ein erfindungsgemäß erhältlicher Polycarbonat-Formkörper mit 0,1 Gew.-% Kaliumperfluorbutansulfonat nach UL Subj. 94 die Brandwidrigkeitsstufe VO bei einer Probendicke von ¹/₁₆'', während ein unmodifizierter Formkörper mit 0,1 Gew.-% Kaliumperfluorbutansulfonat bei der gleichen Probendicke nur V2 erreicht (siehe Tabelle 2).

Zur Prüfung der Spannungsrißkorrosionsbeständigkeit wurden die Prüfkörper bei einer Durchbiegung von 10 mm mit dem Lösungsmittelgemisch Toluol/n-Propanol (1 : 3) und reinem Tetrachlorkohlenstoff benetzt und auf Rißbildung untersucht. Die Prüfkörper aus erfindungsgemäß modifiziertem Polycarbonat zeigen im Gegensatz zu denen aus unmodifiziertem Polycarbonat keine Risse (siehe Tabelle 2).

Die folgenden Beispiele sollen den Erfindungsgegenstand näher erläutern. Die angegebenen relativen Viskositäten werden in Methylenchlorid bei 25°C und einer Konzentration von 5 g/l gemessen.

Die Eigenschaften der Substanzen der Beispiele 1—5 sind in den Tabellen 1 und 2 zusammengestellt.


## Beispiel 1

### (Vergleichsbeispiel)

### Polycarbonat, hergestellt unter Verwendung von 3,2 Mol-% Methacrylsäurechlorid als Kettenabbrecher

Aus 3,192 kg 2,2-Bis-(4-hydroxyphenyl)-propan (Bisphenol A) (14 Mol), 2,53 kg 45%iger wäßriger Natronlauge und 15 l destilliertem Wasser wird eine Lösung hergestellt. Nach Zugabe von 34 kg Methylenchlorid werden unter Rühren 52,5 g Methacrylsäurechlorid (ca. 0,5 Mol), in 1 kg Methylenchlorid gelöst, bei Raumtemperatur zugefügt. Bei 20—25°C werden 2,64 kg Phosgen eingeleitet. Durch Zugabe weiterer 26,3 kg 6,5%iger Natronlauge während der Phosgenierung wird der pH-Wert bei·13—14 gehalten. Anschließend werden 15 ml Triäthylamin zugesetzt und 30 Min. nachgerührt. Dann wird die obere wäßrige Phase abgetrennt, die organische Phase angesäuert und elektrolytfrei gewaschen. Anschließend wird aus der organischen Phase das Methylenchlorid über eine ZSK-Maschine bei 300°C abgedampft und das Polycarbonat granuliert. Die rel. Lösungsviskosität beträgt 1,30.


## Beispiel 2

### (Vergleichsbeispiel)

3996 g des Polycarbonats aus Beispiel 1 werden mit 4 g (0,1 Gew.-%) Kaliumperfluorbutansulfonat in einer Doppelwellenschnecke bei 300°C vermischt und granuliert.

## Beispiel 3

3820 g des Polycarbonats aus Beispiel 1 werden mit 80 g (2 Gew.-%) Benzophenon und 100 g (2,5 Gew.-%) Dibenzyläther als Photoreduktionsmittel in einer Doppelwellenschnecke bei 270°C vermischt und granuliert. Das Granulat wird anschließend unter mehrmaligem Wenden 3 Min. unter einem Philips HTQ 7-Quecksilberdampfhochdruckbrenner belichtet. Der Anteil an vernetztem unlöslichem Polycarbonat beträgt danach ca. 30 Gew.-%.

## Beispiel 4

3816 g des Polycarbonats aus Beispiel 1 werden mit 80 g (2 Gew.-%) Benzophenon und 100 g (2,5 Gew.-%) Dibenzyläther sowie 4 g (0,1 Gew.-%) Kaliumperfluorbutansulfonat in einer Doppelwellenschnecke bei 270°C vermischt und granuliert. Das Granulat wird anschließend unter mehrmaligem Wenden 3 Min. unter einem Philips HTQ 7-Quecksilberdampfhochdruckbrenner belichtet. Der Anteil an vernetztem unlöslichem Polycarbonat beträgt wie in Beispiel 5 ca. 30 Gew.-%.

## Beispiel 5

50 Gew.-Teile des gemäß Beispiel 4 mit ca. 30 Gew.-% vernetztem unlöslichem Polycarbonat aus Beispiel 1 und 50 Gew.-Teile eines handelsüblichen Polycarbonats, Makrolon 2800, werden in einer Doppelwellenschnecke bei 280°C vermischt und granuliert. Der Anteil an vernetztem unlöslichem Polycarbonat beträgt somit ca. 15 Gew.-%.

Die Produkte der Beispiele 1 bis 4 können bei Temperaturen von 270°C bis 300°C durch Extrusion oder Spitzguß zu beliebigen Formkörpern verformt werden. So wurden beispielsweise genormte Prüfkörper für die Schlagzähigkeitsprüfung nach DIN 53 453 der Tabelle 1 durch Spritzguß hergestellt.

Tabelle 1

| Schlagzähigkeit kJ/m$^2$ | DIN 53 453 | Beispiel 1**) | 2**) | 3 | 4 | 5 |
|---|---|---|---|---|---|---|
| Nach 100 h | Kochen in Wasser | 2×95 | 3×90 | n. g. | n. g. | n. g. |
| | | 8×n. g.*) | 7×n. g. | | | |
| Nach 200 h | Kochen in Wasser | 26 | 25 | 5×75 | 6×75 | 6×70 |
| | | | | 5×n. g. | 4×n. g. | 4×n. g. |
| Nach 300 h | Kochen in Wasser | 21 | 20 | 6×50 | 5×50 | 6×48 |
| | | | | 4×n. g. | 5×n. g. | 4×n. g. |
| Nach 400 h | Kochen in Wasser | 16 | 16 | 30 | 28 | 27 |
| Nach 500 h | Kochen in Wasser | 8 | 7 | 18 | 16 | 15 |
| Nach 700 h | Kochen in Wasser | 8 | 7 | 15 | 15 | 14 |

*) n. g. = nicht gebrochen.
**) Vergleichsbeispiele.

0 010 164

Tabelle 2

| Brandprüfung nach UL Subj. 94 | 1/8″ | 1/16″ | Rißbildung nach Benetzen mit Toluol/n-Propanol (1:3), | CCl$_4$ DIN |
|---|---|---|---|---|
| Beispiel 1 (Vergleichsbeispiel) | V2 | V2 | ja | ja |
| Beispiel 2 (Vergleichsbeispiel) | VO | V2 | ja | ja |
| Beispiel 3 | VO | V1 | nein | nein |
| Beispiel 4 | VO | VO | nein | nein |
| Beispiel 5 | VO | VO | nein | nein |

## Patentansprüche

1. Verfahren zur Herstellung von modifizierten thermoplastischen Polycarbonat-Formkörpern, dadurch gekennzeichnet, daß man vernetzbare thermoplastische, aromatische Polycarbonate vor oder nach ihrer Granulierung an der Oberfläche durch Bestrahlung mit energiereichen Strahlen vernetzt und anschließend thermoplastisch verarbeitet, wobei der Anteil an vernetztem Polycarbonat 5—50 Gew.-%, bezogen auf das Gesamtgewicht an unvernetztem und vernetztem Polycarbonat, beträgt.

2. Verfahren nach Anspruch 1, dadurch gekennzeichnet, daß der Anteil an vernetztem Polycarbonat 10—30 Gew.-%, bezogen auf das Gesamtgewicht an unvernetztem und vernetztem Polycarbonat, beträgt.

3. Verfahren nach Anspruch 1, dadurch gekennzeichnet, daß man entweder vor oder nach der Bestrahlung Flammschutzmittel in Mengen von 0,05—5 Gew.-%, bezogen auf das Gewicht der Gesamtmischung, zumischt.

## Claims

1. Process for the preparation of modified thermoplastic polycarbonate moulded articles, characterised in that crosslinkable thermoplastic, aromatic polycarbonates are crosslinked on the surface by irradiation with high-energy rays, before or after being granulated, and are then processed as thermoplastics, the proportion of crosslinked polycarbonate being 5—50% by weight, relative to the total weight of non-crosslinked and grosslinked polycarbonate.

2. Process according to Claim 1, characterised in that the proportion of crosslinked polycarbonate is 10—30% by weight, relative to the total weight of non-crosslinked and crosslinked polycarbonate.

3. Process according to Claim 1, characterised in that flameproofing agents are admixed, either before or after the irradiation, in amounts of 0.05—5% by weight, relative to the weight of the total mixture.

## Revendications

1. Procédé pour la préparation de pièces moulées en polycarbonate thermoplastique modifié, caractérisé en ce que l'on réticule en surface des polycarbonates aromatiques thermoplastiques réticulables, avant ou après leur granulation, avec des radiations énergétiques, la proportion de polycarbonate réticulé étant de 5 à 50% en poids par rapport au poids total du polycarbonate non réticulé et réticulé.

2. Procédé selon la revendication 1, caractérisé en ce que la proportion de polycarbonate réticulé est de 10 à 30% en poids par rapport au poids total du polycarbonate non réticulé et réticulé.

3. Procédé selon la revendication 1, caractérisé en ce que l'on ajoute en mélangeant soit avant, soit après l'irradiation, des agents ignifugeants en quantités de 0,05 à 5% en poids par rapport au poids du mélange total.